# EUROPEAN PATENT APPLICATION

(11) **EP 1 983 234 A1**
(43) Date of publication of application: **22.10.2008**
(21) Application number: 06712720.9
(22) Date of filing: 31.01.2006
(51) Int. Cl.: F16J 12/00, F16J 15/06

(54) **SEAL STRUCTURE OF PRESSURE VESSEL**

(71) Applicant: Shi Mechanical & Equipment Inc., Saijo-shi, Ehime, 7991393 (JP)
(72) Inventor: MORINAGA, Shoji, Saijo-shi, Ehime 7991393 (JP); ITO, Koji, Saijo-shi, Ehime 7991393 (JP); NISHIMI, Haruyuki, Saijo-shi, Ehime 7991393 (JP); KANEMORI, Yoriyuki, Saijo-shi, Ehime 7991393 (JP); MORI, Yuji, Saijo-shi, Ehime 7991393 (JP); YAMAJI, Kiichiro, Saijo-shi, Ehime 7991393 (JP)
(74) Representative: Skuhra, Udo
(86) International application number: PCT/JP2006/301577
(87) International publication number: WO 2007/088593

(57) **Abstract**

There is provided a seal structure which surely maintains sealing performance of a pressure vessel including a bottomed tubular vessel body with an opening end and a lid closing the opening end. In this seal structure of the pressure vessel, annular grooves 11a, 11b and ridges 21a, 21b fitted to each other are formed on both of the inner and outer sides at the joining faces of opening end 11 of the vessel body 10 and the lid 20, and an annular vent hole 30 is formed between the inner ridge 21a and the outer ridge 21b. An air supply hole 31 for supplying an inert gas to the vent hole 30 is formed in the lid 20. The joining faces on the inside of the inner groove 11a and inner ridge 21a are in metal-to-metal contact. Furthermore, gaskets 51a, 51b are held between the ridges 21a, 21b and the grooves 11a, 11b.

## Description

### TECHNICAL FIELD

The present invention relates to a seal structure of a pressure vessel which includes a bottomed tubular vessel body provided with an opening end, and a lid which covers the opening end, and specifically, to a seal structure of the pressure vessel which is heated to a high temperature of, for example, about 250 to 400°C.

### BACKGROUND ART

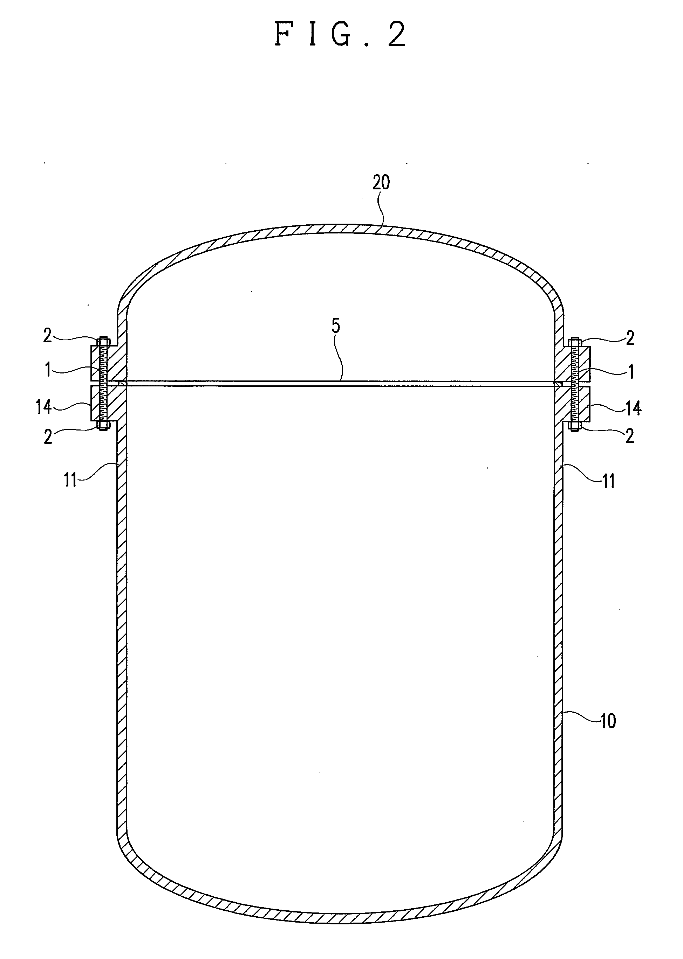

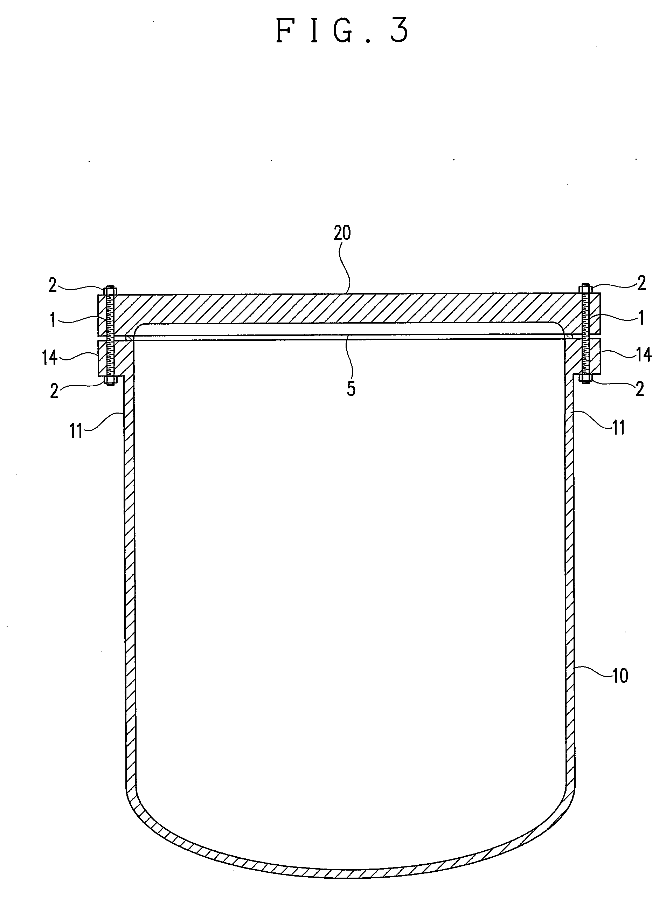

As an apparatus for polymerizing resin, a pressure vessel as shown in FIG. 2 or 3 is used. This pressure vessel includes a bottomed tubular vessel body 10 in a vertical posture provided with an opening end 11, and a lid 20 which covers the opening end 11. The opening end 11 of the vessel body 10 is provided with an outward flange 14, an outer peripheral portion of the lid 20 is joined to the outward flange 14, and both the opening end 11 and the lid 20 are fixed together by bolts 1 and nuts 2.

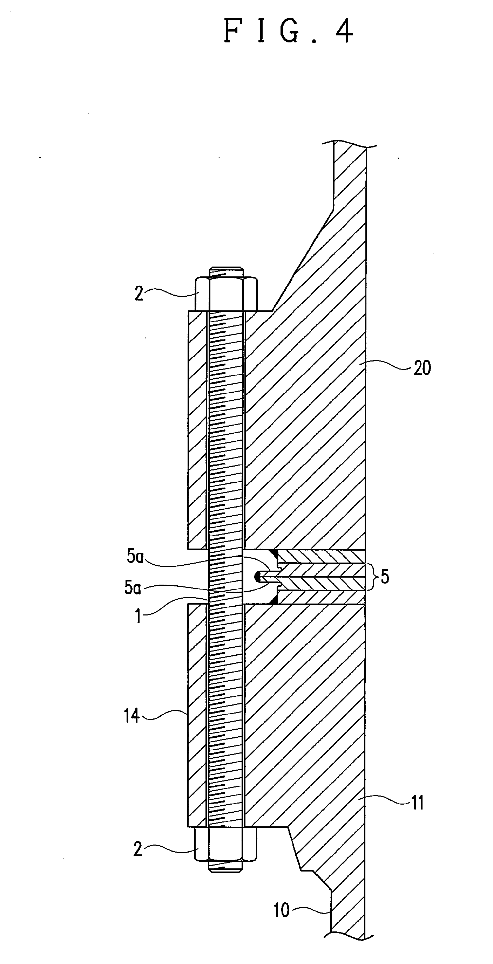

As the lid 20, there are a semi-spherical or semi-elliptical lid as shown in FIG. 2, and a thick plate-shaped lid as shown in FIG. 3. In any of them, as shown in FIG. 4, weld-ring gaskets 5 for increasing the sealing performance in the pressure vessel are used between the lid 20 and the opening end 11 of the vessel body 10. The weld-ring gaskets 5 are thin metal rings which are used in a state where two gaskets overlap each other, outer peripheral ends 5a, 5a on the side of joining faces of the gaskets protrude further away from portions on the side of non-joining faces of the gaskets, and sealing is completely performed by welding the outer peripheral ends 5a and 5a. Although FIG. 4 is a schematic diagram in which the lid 20 shown in FIG. 2 is enlarged, the same weld-ring gaskets 5 are used even in the lid 20 shown in FIG. 3.

Also, jackets (not shown) through which heating medium oil with a high temperature of, for example, about 250 to 400°C flows are additionally provided at an upper face of the lid 20 and at an outer peripheral surface of the vessel body 10. Moreover, the inside of the pressure vessel is kept in a high vacuum state, and a raw material is caused to flow in through a portion of the lid 20. Resin is polymerized within the vessel body 10 from the raw material, and this resin is discharged through a lower end of the vessel body 10.

When maintenance, such as washing the inside of the vessel body 10, is performed on such a pressure vessel, the bolts 1 and the nuts 2 which fix the opening end 11 of the vessel body 10 and the lid 20 are unfastened, and welding of the outer peripheral ends 5a, 5a of the weld-ring gaskets 5 is removed.

Even in an apparatus for filling liquid gas or pressurized substance, a pressure vessel of the same configuration as the aforementioned one is used. DISCLOSURE OF THE INVENTION

### PROBLEM TO BE SOLVED BY THE INVENTION

The pressure vessel expands as being heated to a high temperature of, for example, about 250 to 400°C, and the pressure vessel contracts when the heating ends. Accordingly, the weld-ring gaskets 5 used between the vessel body 10 and the lid 20 expand and contract thermally.

However, since it is difficult to evenly control the temperature of the vessel body 10 and the lid 20, the upper and lower weld-ring gaskets 5 differ in thermal contraction, and consequently thermal stress is generated. Then, welded portions of the weld-ring gaskets 5 may be cracked due to the thermal stress, and a gap may be created. As ambient air flows into the pressure vessel through this gap, resin polymerized within the vessel body 10 will increases irregular products which do not have predetermined quality, that is, deteriorates the yield.

For this reason, pressure vessels in which the cross-sectional shape of the outer peripheral ends 5a, 5a of the weld-ring gaskets 5 is made circular are provided so that welded portions are not cracked even if thermal stress is generated in the weld-ring gaskets 5 due to thermal expansion and contraction. However, vertical differential shrinkage caused in the weld-ring gaskets 5 provided in a large-sized pressure vessel whose internal diameter exceeds 4 m is great. As a result, the deformation volume of the gaskets cannot be absorbed.

Thus, an object of the invention is to provide a seal structure of a pressure vessel adapted to surely maintain sealing performance even if thermal expansion and contraction take place.

### MEANS FOR SOLVING THE PROBLEM

According to the present invention, there is provided a seal structure of a pressure vessel that includes a bottomed tubular vessel body provided with an opening end and a lid closing the opening end. Annular grooves and ridges fitted to each other are formed on both of the inner and outer sides at the joining faces of the opening end of the vessel body and the lid, an annular vent hole is formed between the inner ridge and the outer ridge, an air supply hole for supplying an inert gas to the vent hole is formed in the lid or the vessel body, and the joining faces inside the inner ridge and the inner groove are in metal-to-metal contact, and gaskets are held between the ridges and the grooves.

According to this seal structure of a pressure vessel, annular grooves and ridges fitted to each other are formed on both of the inner and outer sides at the joining faces of the opening end of the vessel body and the lid, an annular vent hole filled with an inert gas is formed between the inner ridge and the outer ridge, and gaskets are held between the ridges and the grooves. Thereby, there is no welded portion, and even when thermal contraction takes place, sealing can be surely made so that ambient air may not flow into the vessel body through the thermally contracted portion.

Moreover, the joining faces inside the inner ridge and groove are in metal-to-metal contact. Thereby, since the resin which has flowed into the vessel body does not stagnate at the joining faces, the resin can be polymerized without any alteration. Also, even if the fastening margin of the gaskets is insufficient due to manufacturing errors, the gaskets held between the double ridges and grooves prevent ambient air from entering the pressure vessel. Moreover, even when an inert gas is supplied to the vent hole provided between both the ridges through the air supply hole and this inert gas enters the pressure vessel, ambient air will not enter the pressure vessel.

Further, in the seal structure of a pressure vessel of the present invention, preferably, the lid is formed by integrating together a lid body and a frame body joined to the opening end of the vessel body, and the frame body is formed with both the ridges. According to this seal structure of a pressure vessel, the ridges are formed in the frame body integrated with the lid body. Thereby, the ridges can be formed easily.

Further, in the seal structure of a pressure vessel of the present invention, preferably, the inside of the frame body joined to the lid is formed with a concave curved surface. According to this seal structure of a pressure vessel, a concave curved surface is formed in the frame body. Thereby, any angular portion is not provided inside the lid body, and a raw material caused to flow into the pressure vessel can be prevented from stagnating in a boundary portion between the lid body and the frame body.

Further, in the seal structure of a pressure vessel of the present invention, preferably, the gasket held between the inner ridge and groove is a metal jacket gasket, and the gasket held between the outer ridge and groove is gland packing. According to this seal structure of a pressure vessel, a metal jacket gasket having excellent thermal resistance is used as the gasket held between the inner ridge and groove. Thereby, the seal structure is hardly deformed. As a result, the joining faces inside the inner ridge and groove can be maintained in metal-to-metal contact. On the other hand, gland packing to be suitably used in a portion to which a tensional force is applied is used as the gasket held between the outer ridge and groove. Thereby, the outsides of the vessel body and the lid to be fastened together by bolts and nuts can be sealed appropriately. ADVANTAGE OF THE INVENTION

According to the seal structure of a pressure vessel, annular grooves and ridges fitted to each other are formed on both of the inner and outer sides at the joining faces of the opening end of the vessel body and the lid, an annular vent hole filled with an inert gas is formed between the inner ridge and the outer ridge, and gaskets are held between the ridges and the grooves. Thereby, sealing performance can be enhanced even when the gaskets are not welded, and ambient air can be prevented from flowing into the vessel body even when thermal contraction takes place. Accordingly, since a raw material caused to flow into the pressure vessel is heated in a state where ambient air does not flow into the pressure vessel, and products having predetermined quality can be manufactured, the yield can be improved.

### BRIEF DESCRIPTION OF THE DRAWINGS

FIG. 1 is an enlarged sectional view of essential parts showing one embodiment of a seal structure of a pressure vessel of the present invention.
FIG. 2 is a schematic sectional view showing an example of the pressure vessel.
FIG. 3 is a schematic sectional view showing an example of a pressure vessel different from the above one.
FIG. 4 is an enlarged sectional view of essential parts showing a seal structure of a conventional pressure vessel.

### REFERENCE NUMERALS

10: VESSEL BODY
11: OPENING END
11a: GROOVE
11b: GROOVE
20: LID
20a: LID BODY
21: FRAME BODY
21a: RIDGE
21b: RIDGE
30: VENT HOLE
31: AIR SUPPLY HOLE
51a: GASKET
51b: GASKET

### PREFERRED EMBODIMENTS FOR CARRYING OUT THE INVENTION

One embodiment of a seal structure of a pressure vessel of the present invention will be described referring to the drawings. It is to be noted herein that the description will be made by allocating the same reference numerals as conventional ones to the same portions. As shown in FIGS. 2 or 3, this pressure vessel also includes a bottomed vessel body 10 in a vertical posture provided with an opening end 11, a lid 20 which covers the opening end 11, and an outward flange 14 provided at the opening end 11 of the vessel body 10, in which an outer peripheral portion of the lid 20 are fastened together by bolts 1 and nuts 2.

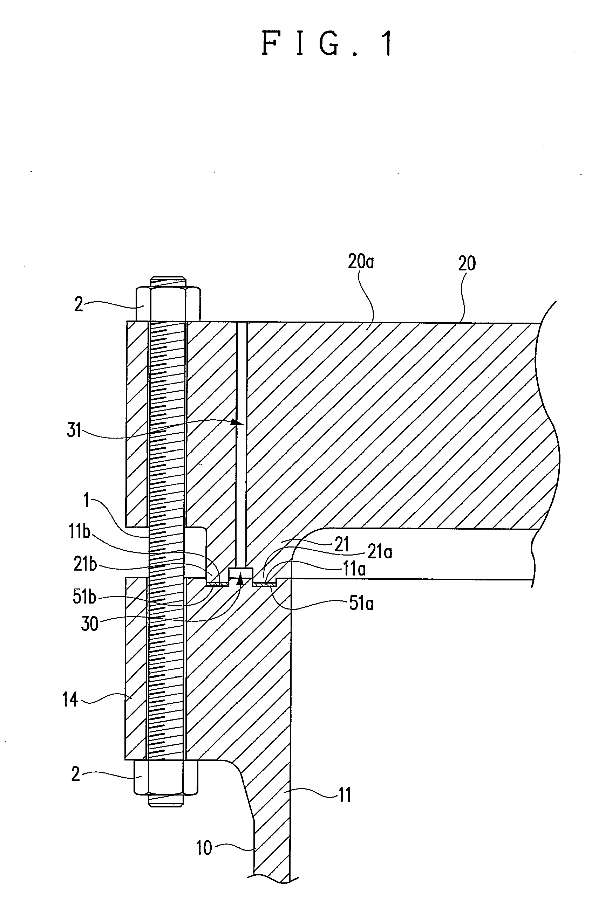

Also, in order to be able to surely maintain the sealing performance in the vessel body 10, the vessel body 10 is provided with a seal structure as shown in FIG. 1. This seal structure is formed at each of joining faces of the opening end 11 of the vessel body 10 and the lid 20, and is configured about double annular grooves 11a and 11b and ridges 21a and 21b which are fitted to each other.

The annular grooves 11a and 11b are formed at the joining face of the opening end 11 of the vessel body 10, and the annular ridges 21a and 21b are formed at the frame body 21 provided in the lid body 20a. The frame body 21 has the same internal diameter as the internal diameter of the opening end 11 of the vessel body 10, and is integrated with the lid body 20a by welding, etc. When the ridges 21a, 21b are formed at the frame body 21 and are integrated with the lid body 20a, the ridges 21a and 21b can be easily formed at the lid body 20a.

Also, in a state where the ridges 21a and 21b are fitted into the grooves 11a and 11b, respectively, an annular vent hole 30 is provided between the inner ridge 21a and the outer ridge 21b. The inside of the vent hole 30 is adapted to be filled with inert gas, such as nitrogen, to be supplied through an air supply hole 31. The air supply hole 31 is exposed to the surface of the lid 20, and is connected to a pipe (not shown). The air supply hole 31 is formed at the opening end 11 of the vessel body 10 instead of the lid 20.

Also, both the joining faces of the frame body 21 of the lid 20 and the opening end 11 of the vessel body 10 are joined together inside the inner ridge 21a and groove 11a by metal-to-metal contact. As both the joining faces are brought into tight contact with each other by metal-to-metal contact, a raw material which has flowed into the pressure vessel can be prevented from stagnating between the frame body 21 of the lid 20 and the opening end 11 of the vessel body 10.

Also, gaskets 51a and 51b are held between the ridges 21a and 21b and the grooves 11a and 11b. Even if the fastening margin of the gaskets is insufficient due to manufacturing errors, the gaskets 51a and 51b prevent ambient air from entering the pressure vessel. Further, the grooves 11a and 11b are formed at the joining faces of the opening end 11 of the vessel body 10, and the gaskets 51a and 51b are fitted into the grooves 11a and 11b so as to be dropped thereinto. Thereby, the gaskets 51a and 51b are not displaced.

As the inner gasket 51a, for example, a metal jacket gasket is used so that metal-to-metal contact can be maintained. The metal jacket gasket is one obtained by coating a core, such as a non-asbestos cushioning material, with a metal thin film, such as mild steel, copper, nickel, or aluminum, and has the feature that thermal resistance is excellent.

On the other hand, as the outer gasket 51b, for example, gland packing is used so that the outside where the bolts 1 and the nuts 2 are fastened together can be sealed suitably. The gland packing is one molded from various kinds of lubricant and caking additives, using inorganic fibers or organic fibers as a main constituent, and is used while a tensional force is given thereto.

Further, an inner periphery of the frame body 21 is formed with a concave curved surface so that a corner is not provided at a boundary portion between the frame body and the lid body 20a. This concave curved surface prevents the liquid raw material caused to flow into the pressure vessel from stagnating at an inner corner of the lid 20.

When the lid 20 closes the opening end 11 of the vessel body 10 in the pressure vessel provided with such a seal structure, the ridges 21a and 21b are fitted into the grooves 11a and 11b with the gaskets 51a and 51b held therebetween, and the bolts 1 and the nuts 2 are fastened together with the inner joining faces being in metal-to-metal contact. Also, while inert gas is supplied into the vent hole 30 through the air supply hole 31, the liquid raw material is caused to flow into the vessel body 10 through a portion of the lid 20. Since this raw material which has been caused to flow into the vessel body does not stagnate thanks to metal-to-metal contact between the frame body 21 and the opening end 11 of the vessel body 10, or thanks to the concave curved surface of the frame body 21, high-quality resin with no gel generated therein is polymerized.

Further, even when the vessel body 10 and the lid 20 expand as the pressure vessel is heated, and the vessel body 10 and the lid 20 contract as the heating ends, since the grooves 11a and 11b and the ridges 21a and 21b fit to each other, and the gaskets 51a and 51b are held between both the ridges and grooves 21a, 21b, 11a, and 11b, a gap is not created between the vessel body 10 and the lid 20. Moreover, since inert gas does not enter the vessel body 10 through the vent hole 30, ambient air does not flow into the vessel body at all. In this way, high-quality resin is polymerized within the pressure vessel.

During maintenance, such as washing the inside of the vessel body 10, the bolts 1 and the nuts 2 which fasten the vessel body 10 and the lid 20 together are unfastened, and the lid 20 is removed. At this time, the gaskets 51a and 51b can be removed from the opening end 11 of the vessel body 10.

The present invention is not limited to the above embodiment, but can be variously changed within the scope of the particulars of the invention set forth in the claims. For example, this pressure vessel can also be used not as an apparatus for manufacturing polymers, but as an apparatus which fills liquid gas or pressurized substance.

Further, the pressure vessel can be similarly implemented not in a vertical posture but in a horizontal posture and in an inclined posture. Moreover, the ridge 21a and 21b and the groove 11a and 11b may be provided not as double structure, but as triple or more structure.

### INDUSTRIAL APPLICABILITY

The seal structure of the pressure vessel of the present invention can be effectively utilized for a pressure vessel which is used as an apparatus for polymerizing resin at a high temperature of 250 to 400°C, or an apparatus for filling liquid gas or pressurized substance.

## Claims

1. A seal structure of a pressure vessel comprising a bottomed tubular vessel body provided with an opening end and a lid closing the opening end, wherein annular grooves and ridges fitted to each other are formed on both of the inner and outer sides at the joining faces of the opening end of the vessel body and the lid, an annular vent hole is formed between the inner ridge and the outer ridge, an air supply hole for supplying an inert gas to the vent hole is formed in the lid or the vessel body, and the joining faces inside the inner ridge and the inner groove are in metal-to-metal contact, and gaskets are held between the ridges and the grooves.

2. The seal structure of a pressure vessel according to Claim 1,
wherein the lid is formed by integrating together a lid body and a frame body joined to the opening end of the vessel body, and the frame body is formed with both the ridges.

3. The seal structure of a pressure vessel according to Claim 2,
wherein the inside of the frame body joined to the lid is formed with a concave curved surface.

4. The seal structure of a pressure vessel according to any one of Claims 1 to 3,
wherein the gasket held between the inner ridge and groove is a metal jacket gasket, and the gasket held between the outer ridge and groove is gland packing.
